# EUROPÄISCHE PATENTSCHRIFT

(11) **EP 1 342 360 B1**
(45) Veröffentlichungstag und Bekanntmachung des Hinweises auf die Patenterteilung: **01.03.2006**
(21) Anmeldenummer: 01271000.0
(22) Anmeldetag: 10.12.2001
(51) Int. Cl.: H04M 3/22, H04Q 3/00

(54) **ERMITTLUNG DES VERBINDUNGS- UND/ODER GERÄTEZUSTANDES EINES TEILNEHMER-ENDGERÄTS**
DETERMINATION OF THE CONNECTION AND/OR DEVICE STATUS OF A USER TERMINAL
DETERMINATION DE L'ETAT DE L'APPAREIL ET/OU DE LA LIAISON D'UN TERMINAL D'ABONNE

(30) Priorität: 14.12.2000 DE 10062382
(43) Veröffentlichungstag der Anmeldung: 10.09.2003
(73) Patentinhaber: SIEMENS AKTIENGESELLSCHAFT, 80333 München (DE)
(72) Erfinder: KREMBS, Bernhard, 82031 Grünwald (DE); KRAUSS, Gerhard, 80689 München (DE); POLAJNAR, Vukica Mirkovic, 1000 Ljubljana (SI)
(86) Internationale Anmeldenummer: PCT/DE2001/004642
(87) Internationale Veröffentlichungsnummer: WO 2002/049328

(56) Entgegenhaltungen:
- US-A- 5 490 251
- US-A- 5 592 530
- US-A- 5 642 396
- US-A- 5 881 132

## Beschreibung

Die vorliegende Erfindung bezieht sich auf ein Verfahren zur Ermittlung des Verbindungs- und/oder Gerätezustandes eines Teilnehmer-Endgeräts- Die Erfindung beschreibt genauer gesagt ein Verfahren, mit Hilfe dessen es möglich ist, von einem Telefonanschluß aus (Teilnehmer-Endgerät, Operator-Platz etc.) den Verbindungszustand (z.B. frei oder belegt) und/oder den Gerätezustand (z.B. Anrufumleitung aktiviert, Anrufsperre etc.) eines anderen Teilnehmer-Endgeräts zu ermitteln.

Bei Operator-Plätzen. (zum Beispiel in Call Centern) besteht das Problem, dass diese oftmals belegt sind und der Anrufer deshalb in eine Warteschlange gestellt wird. Der Grund dafür liegt darin, dass der Operator-Platz oft erst mittels zeitaufwendiger Anrufe bzw. Rückrufe herausfinden muss, ob eine Weitervermittlung des anfragenden Anschlusses zu dem gewünschten Teilnehmer-Endgerät zur Zeit möglich ist. Durch eine bessere Reaktionsmöglichkeit des Operator-Platzes kann die Vermittlungsdauer sinken und dadurch die Wartezeit für neue Anrufer reduziert werden.

In der US 5,490,251, "Method and apparatus for transmitting data over a signalling channel in a digital telecommunications network" vom 9. August 1991 wird dazu ein Kommunikationssystem für den Datenaustausch zwischen einem Terminal und einem Zentralrechner über den Signalisierungskanal eines ISDN-Netzwerkes offenbart, bei dem ein Aufbau eines Sprach- oder Datenkanals nicht erforderlich ist. Dabei werden Kreditkarten-Transaktionen wie etwa eine Anforderung zur Authentifizierung vom Terminal an den Zentralrechner gesendet, dort ausgewertet und anschließend ein Ergebnis zum Terminal rückübermittelt. Die Kommunikation erfolgt dabei ausschließlich über den Signalisierungskanal des ISDN-Netzwerkes. Vorzugzweise enthalten sowohl die Anforderung als auch die Antwort vom Zentralrechner ein "user-user information element" und entsprechen dem Standard CCITT Q.931. Die Datenübertragung an sich über einen Signalisierungskanal eines ISDN-Netzes ist also bekannt.

Aufgabe der vorliegenden Erfindung ist es daher, eine Technik bereitzustellen, mit Hilfe der ein anfragender Anschluss in effizienter Weise den Verbindungs- und/oder Gerätezustand eines anderen Teilnehmer-Endgeräts ermitteln kann.

Zur Ermittlung des Verbindungs- und/oder Gerätezustands kommen alle Informationen in Frage, die potentiell zur Beurteilung herbeigezogen werden können, ob und ggf. in welcher Weise eine Sprachkanal-Verbindung zu dem betreffenden Teilnehmer-Endgerät ausgehend von dem anfragenden Anschluss aus aufgebaut werden kann.

Diese Aufgabe wird durch ein Verfahren mit den Merkmalen des Anspruchs 1 gelöst. Die abhängigen Ansprüche bilden den zentralen Gedanken der Erfindung in besonders vorteilhafter Weise weiter.

Diese Aufgabe wird genauer gesagt gemäß der Erfindung dadurch gelöst, dass die folgenden Schritte ausgeführt werden: Zuerst wird eine Abfragemeldung zusammen mit einer Anschlusskennung des Teilnehmer-Endgeräts, dessen Verbindungs- und Gerätezustand ermittelt werden soll, von einem anfragenden Anschluss zu einer Vermittlungsstelle des Teilnehmer-Endgeräts übertragen. Dann wird der Verbindungs- und Gerätezustand des Teilnehmer-Endgeräts, dessen Verbindungs- und Gerätezustand ermittelt werden soll, durch die Vermittlungsstelle abgefragt. Schließlich wird der ermittelte Verbindungs- und Gerätezustand von der Vermittlungsstelle zu dem anfragenden Anschluss übertragen.

Der anfragende Anschluss kann bspw. ein Operator-Platz oder ein weiteres Teilnehmer-Endgerät sein.

Der ermittelte Verbindungs- und Gerätezustand des Teilnehmer-Endgeräts kann bei dem anfragenden Anschluss optisch oder akustisch angezeigt werden.

Die Übertragung der Abfragemeldung sowie die Übertragung des ermittelten Verbindungs- und Gerätezustands vom anfragenden Anschluss zur anfragenden Vermittlungsstelle bzw. von der anfragenden zur ermittelnden Vermittlungsstelle können jeweils über einen Signalisierungskanal erfolgen, so dass kein Sprach- oder allgemein Nutzdatenkanal aufgebaut werden muss.

Der Schritt der Übertragung der Abfragemeldung zusammen mit der Anschlusskennung des Teilnehmer-Endgeräts zu der Vermittlungsstelle des Teilnehmer-Endgeräts, dessen Verbindungs- und Gerätezustand ermittelt werden soll, kann insbesondere die folgenden Schritte aufweist:
- Übertragen der Abfragemeldung zusammen mit der Anschlusskennung des Teilnehmer-Endgeräts von dem anfragenden Anschluss zu einer Vermittlungsstelle des anfragenden Anschlusses, und
- Übertragen der Abfragemeldung und der Anschlusskennung des Teilnehmer-Endgeräts von der Vermittlungsstelle des anfragenden Anschlusses zu der Vermittlungsstelle des Teilnehmer-Endgeräts.

Der Schritt des Übertragens der Abfragemeldung und der Anschlusskennung des Teilnehmer-Endgeräts gegebenenfalls zusammen mit einer Leistungsmerkmalskennung von der Vermittlungsstelle des anfragenden Anschlusses zu der Vermittlungsstelle des Teilnehmer-Endgeräts kann verbindungslos unter Zuhilfenahme der Anschlusskennung des Teilnehmer-Endgeräts erfolgen.

Der Schritt des Übertragens der Abfragemeldung und der Anschlußkennung des Teilnehmer-Endgeräts von der Vermittlungsstelle des anfragenden Anschlusses zu der Vermittlungsstelle des Teilnehmer-Endgeräts kann alternativ auch über eine ISDN-Benutzerteilverbindung erfolgen.

Nach dem Schritt des Übertragens des ermittelten Verbindungs- und Gerätezustands von der Vermittlungsstelle zu dem anfragenden Anschluß kann der anfragende Anschluss diese Übertragung durch eine weitere Meldung von dem anfragenden Anschluss zu der ersten Vermittlungsstelle bestätigen. Daraufhin wird die Verbindung von dem anfragenden Anschluss zu der Vermittlungsstelle abgebaut.

Weitere Vorteile, Merkmale und Eigenschaften der vorliegenden Erfindung werden nun anhand eines Ausführungsbeispiels bezugnehmend auf die begleitenden Zeichnungen näher erläutert.
Figur 1 zeigt ein Blockschaltbild für ein System zur Abfrage des Verbindungs- und Gerätezustandes eines Teilnehmer-Endgeräts, und
Figur 2 zeigt den entsprechenden Meldungsablauf.

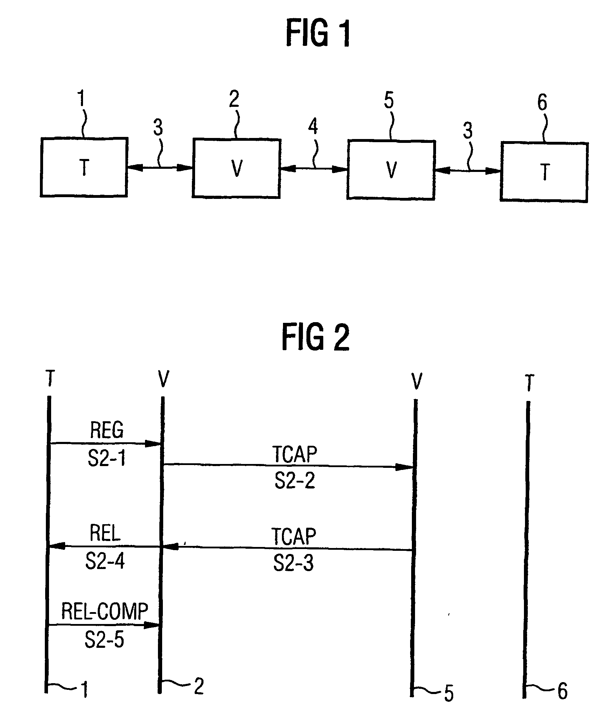

In Figur 1 ist ein Anschluss 1 dargestellt, der ein Teilnehmer-Endgerät oder ein Operator-Platz sein kann. Dieser Anschluss 1 ist bspw. mittels einer ISDN-Verbindung 3 mit einer ihm zugeordneten Vermittlungsstelle 2 verbunden. Die Vermittlungsstelle 2 kann wiederum u.a. mit weiteren Vermittlungsstellen, wie bspw. der dargestellten Vermittlungsstelle 5 kommunizieren. Die weitere Vermittlungsstelle 5 kann u.a. bspw. wiederum über eine ISDN-Verbindung 3 mit einem Teilnehmer-Endgerät 6 in Verbindung stehen.

Im Zuge der weiteren Erläuterung ist angenommen, dass von dem Anschluss 1 aus der Verbindungs- und Gerätezustand des Teilnehmer-Endgeräts 6 ermittelt werden soll.

Erfindungsgemäß werden für diesen Verbindungs- und Gerätezustand-Abfragevorgang nur Signalisierungskanäle verwendet, so dass die Ressource Sprachkanal geschont werden kann. Eine Sprachkanal-Verbindung kann ggf. später aufgebaut werden, falls die Abfrage über den Nichtsprachkanal (Signalisierungskanal) übertragen wird.

Für die Kommunikation 3 zwischen dem Anschluss 1 und der Vermittlungsstelle 2 kommt dabei bspw. der D-Kanal des ISDN-Systems in Frage.

Für die Zwischenamtsignalisierung 4 zwischen den beiden Vermittlungsstellen 2, 5 kommen bspw. der sog. TCAP-Mechanismus oder eine ISDN-Benutzerteilverbindung (ISUP) in Frage.

Der TCAP (Transaction Capability Application Part)-Mechanismus ist ein verbindungsloses SS#7-Protokoll für den Austausch von Informationen, die nicht im Zusammenhang mit einem Ruf oder einer Verbindung stehen.(Anm.: Das SS#7-Protokoll ist ein Signalisierungs-Protokoll, das für digitale Fernsprechnetze entwickelt und unter den ITU-T-Standards Q.700 bis Q.795 beschrieben wurde. Es kann u.a. für ISDN und ATM verwendet werden.)

Eine ISDN-Benutzerteilverbindung (ISUP = ISDN user part) ist eine von mehreren möglichen Benutzerteilen des SS#7-Protokolls und wird zur Übertragung von Zusatzinformationen über den Signalisierungskanal zwischen Vermittlungsstellen verwendet werden.

Der Meldungsablauf bei der Abfrage des Verbindungs- und Gerätezustandes eines öffentlichen Teilnehmers ist in Figur 2 dargestellt. Dem anfragenden Anschluss, in diesem Beispiel ein Operator-Platz 1, soll die Möglichkeit gegeben werden, nachzuforschen, ob er einen bei ihm anstehenden Anruf an einen Teilnehmer-Endgerät 6 weitervermitteln kann oder nicht. Dazu fragt der Operator-Platz 1 den Verbindungszustand Teilnehmer-Endgeräts 6 in folgender Weise ab:

Der Operator-Platz 1 sendet eine Abfragemeldung (REGISTER) (S2-1), vorzugsweise eine Register- oder Facility- oder Infot-Meldung, zusammen mit der Anschlusskennung (Rufnummer) des Teilnehmer-Endgeräts 6 und gegebenenfalls mit einer Leistungsmerkmalskennung zur operatorseitigen Vermittlungsstelle 2, die dann einen Signalisierungskanal 4 zur Ziel-Vermittlungsstelle 5 aufbaut (S2-2). Mit "Ziel-Vermittlungsstelle" wird dabei diejenige Vermittlungsstelle bezeichnet, die dem Teilnehmer-Endgerät 6 zugeordnet ist, dessen Verbindungszustand ermittelt werden soll.

Im Falle des TCAP-Mechanismus kann die Kommunikation zwischen den Vermittlungsstellen 2, 5 verbindungslos unter Zuhilfenahme der mitübermittelten Anschlusskennung des Teilnehmer-Endgeräts 6 erfolgen, dessen Verbindungs- und Gerätezustand abgefragt werden soll.

Die Ziel-Vermittlungsstelle 5 ermittelt dann den Verbindungs- und Gerätezustand des Teilnehmer-Endgeräts 6. Der Verbindungs- und/oder Gerätezustand gibt an, ob das Teilnehmer-Endgerät 6 frei oder belegt ist, ob der Anschluss gesperrt ist oder eine Anrufumlenkung aktiviert ist und weitere denkbare Zustände. Diese Ermittlung des Verbindungs- und Gerätezustands wird dabei ohne aktive Beteiligung des Teilnehmer-Endgeräts 6 alleine durch die Ziel-Vermittlungsstelle 5 durchgeführt.

Der ermittelte Verbindungs- und Gerätezustand des Teilnehmer-Endgeräts 6 wird dann wieder über den bestehenden Signalisierungskanal 4 (TCAP, ISUP, et.) von der Ziel-Vermittlungsstelle 5 zur operatorseitigen Vermittlungsstelle 4 zurück signalisiert (S2-3). Dort kann die Information bezüglich des ermittelten Verbindungs- und Gerätezustands des Teilnehmer-Endgeräts 6 aufbereitet und an einem Bildschirm oder einer sonstigen geeigneten optischen oder akustischen Anzeige des Operator-Platzes 1 angezeigt werden. Im Zuge dieser Aufbereitung der Verbindungszustands-Information kann bspw. eine Umsetzung in eine durch den Operator-Platz 1 gewählte Sprache erfolgen, falls die Anzeige in Textform erfolgt.

Nach erfolgter Übertragung der Verbindungs- und Gerätezustand-Information oder gleichzeitig mit dieser sendet die o-peratorseitige Vermittlungsstelle 2 einen Befehl (RELEASE) zu dem Operator-Platz 1, um den Abbau der Signalkanal-Verbindung zwischen der Vermittlungsstelle 2 und dem Operator-Platz 1 (S2-4) einzuleiten. Der Abbau dieser Verbindung wird anschließend durch Übermittlung einer entsprechenden Meldung (RELEASE COMPLETE) von dem Operator-Platz 1 zu der operatorseitigen Vermittlungsstelle 2 bestätigt (S2-5).

Somit über den Verbindungs- und Gerätezustand des Teilnehmer-Endgeräts 6 in Kenntnis gesetzt kann der Operator-Platz 1 schließlich unter Verwendung dieser Information den weiteren Verlauf eines bei ihm anstehenden, zu vermittelnden Rufes in effizienter Weise steuern.

Der Operator-Platz 1 kann abhängig von der ermittelten Verbindungs- und Gerätezustands-Information bspw. wie folgt reagieren:
- Rücknahme des Vermittlungsversuches, oder
- Durchschalten des zu vermittelnden Rufes oder
- Aufschalten auf ein existierendes Gespräch beim Teilnehmer-Endgerät 6.

Gemäß einer Weiterbildung der genannten Technik kann ein Teilnehmer-Endgerät, das bei dem Operator-Platz 7 einen Vermittlungsversuch angefragt hat, direkt bezüglich des gemäß dem oben erläuterten Verfahren ermittelten Verbindungs- und Gerätezustands zu informieren.

Auch wenn im oben erläuterten Ausführungsbeispiel nur zwei Vermittlungsstellen gezeigt sind, kann der Verbindungszustand-Abfragevorgang auch über eine beliebig größere Anzahl an Vermittlungsstellen erfolgen.

## Patentansprüche

1. Verfahren zur Ermittlung des Verbindungs- und/oder Gerätezustandes eines Teilnehmer-Endgeräts,
- wobei eine Abfragemeldung (REGISTER) zusammen mit einer Anschlusskennung des Teilnehmer-Endgeräts (6), dessen Verbindungs- und/oder Gerätezustand ermittelt werden soll, von einem anfragenden Anschluss (1) zu einer Vermittlungsstelle (5) des Teilnehmer-Endgeräts (6) übertragen wird und
- wobei der ermittelte Verbindungs- und/oder Gerätezustand von der Vermittlungsstelle (5) zu dem anfragenden Anschluss (1) übermittelt wird,
**dadurch gekennzeichnet,**
- **dass** der Verbindungs- und/oder Gerätezustands des Teilnehmer-Endgeräts (6) durch die Vermittlungsstelle (5) ermittelt wird.

2. Verfahren nach Anspruch 1,
**dadurch gekennzeichnet,**
**dass** der anfragende Anschluss ein operator-Platz (1) oder ein weiteres Teilnehmer-Endgerät ist.

3. Verfahren nach Anspruch 1 oder 2,
**dadurch gekennzeichnet,**
**dass** der ermittelte Verbindungs- und/oder Gerätezustand des Teilnehmer-Endgeräts (6) bei dem anfragenden Anschluss (1) optisch angezeigt wird.

4. Verfahren nach einem der vorhergehenden Ansprüche,
**dadurch gekennzeichnet,**
**dass** die Übertragung der Abfragemeldung sowie die Übertragung des ermittelten Verbindungs- und/oder Gerätezüstands jeweils über einen Signalisierungskanal (D-Kanal, TCAP) erfolgen.

5. Verfahren nach einem der vorhergehenden Ansprüche,
**dadurch gekennzeichnet,**
**dass** der Schritt der Übertragung der Abfragemeldung zusammen mit der Anschlusskennung des Teilnehmer-Endgeräts (6) zu der Vermittlungsstelle (5) des Teilnehmer-Endgeräts (6), dessen Verbindungs- und/oder Gerätezustand ermittelt werden soll, die folgenden Schritte aufweist:
- Übertragen der Abfragemeldung zusammen mit der Anschlusskennung des Teilnehmer-Endgeräts (6) von dem anfragenden Anschluss (1) zu einer Vermittlungsstelle (3) des anfragenden Anschlusses (1), und
- Übertragen der Abfragemeldung und der Anschlusskennung des Teilnehmer-Endgeräts (6) von der Vermittlungsstelle (3) des anfragenden Anschlusses (1) zu der Vermittlungsstelle (5) des Teilnehmer-Endgeräts (6).

6. Verfahren nach Anspruch 5,
**dadurch gekennzeichnet,**
**dass** der Schritt des Übertragens der Abfragemeldung und der Anschlusskennung des Teilnehmer-Endgeräts (6) von der Vermittlungsstelle (3) des anfragenden Anschlusses (1) zu der Vermittlungsstelle (5) des Teilnehmer-Endgeräts (6) verbindungslos (TCAP) unter Zuhilfenahme der Anschlusskennung des Teilnehmer-Endgeräts (6) erfolgt.

7. Verfahren nach Anspruch 5,
**dadurch gekennzeichnet,**
**dass** der Schritt des Übertragens der Abfragemeldung und der Anschlusskennung des Teilnehmer-Endgeräts (6) von der Vermittlungsstelle (3) des anfragenden Anschlusses (1) zu der Vermittlungsstelle (5) des Teilnehmer-Endgeräts (6) über eine ISDN-Benutzerteilverbindung (ISUP) erfolgt.

8. Verfahren nach einem der vorhergehenden Ansprüche,
**dadurch gekennzeichnet,**
**dass** nach dem Schritt des Übertragens des ermittelten Verbindungs- und Gerätezustands von der Vermittlungsstelle (5) zu dem anfragenden Anschluss (1) der anfragende Anschluss (1) diese Übertragung durch eine weitere Meldung (RELEASE COMPLETE) von dem anfragenden Anschluss (1) zu der ersten Vermittlungsstelle (2) bestätigt und daraufhin die Verbindung von dem anfragenden Anschluss (1) zu der Vermittlungsstelle (2) abgebaut wird.

9. Verfahren nach einem der vorhergehenden Ansprüche,
**dadurch gekennzeichnet,**
**dass** ein Teilnehmer-Endgerät, das bei dem Operator-Platz (1) einen Vermittlungsversuch anfragt, direkt bezüglich des ermittelten Verbindungs- und Gerätezustands des Teilnehmer-Endgeräts (6) informiert wird.

## Claims

1. Method for determining the connection and/or device status of a user terminal,
- wherein an interrogation message (REGISTER) is transmitted together with a line identification of the user terminal (6) whose connection and/or device status is to be determined from a requesting subscriber line (1) to an exchange (5) associated with the user terminal (6) and
- wherein the determined connection and/or device status is transmitted from the exchange (5) to the requesting subscriber line (1),
**characterised in that**
- the connection and/or device status of the user terminal (6) is determined by the exchange (5).

2. Method according to claim 1,
**characterised in that**
the requesting subscriber line is an operator station (1) or a further user terminal.

3. Method according to claim 1 or 2,
**characterised in that**
the determined connection and/or device status of the user terminal (6) is visually displayed at the requesting subscriber line (1).

4. The method according to one of the preceding claims,
**characterised in that**
the transmission of the interrogation message and the transmission of the determined connection and/or device status are effected in each case via a signalling channel (D channel, TCAP).

5. Method according to one of the preceding claims,
**characterised in that**
the step of transmitting the interrogation message together with the line identification of the user terminal (6) to the exchange (5) of the user terminal (6) whose connection and/or device status is to be determined comprises the following steps:
- transmitting the interrogation message together with the line identification of the user terminal (6) from the requesting subscriber line (1) to an exchange (3) associated with the requesting subscriber line (1), and
- transmitting the interrogation message and the line identification of the user terminal (6) from the exchange (3) of the requesting subscriber line (1) to the exchange (5) associated with the user terminal (6).

6. Method according to claim 5,
**characterised in that**
the step of transmitting the interrogation message and the line identification of the user terminal (6) from the exchange (3) associated with the requesting subscriber line (1) to the exchange (5) associated with the user terminal (6) is effected in a connectionless manner (TCAP) with the aid of the line identification of the user terminal (6).

7. Method according to claim 5,
**characterised in that**
the step of transmitting the interrogation message and the line identification of the user terminal (6) from the exchange (3) of the requesting subscriber line (1) to the exchange (5) of the user terminal (6) is effected via an ISDN user part (ISUP) connection.

8. Method according to one of the preceding claims,
**characterised in that**
following the step of transmitting the determined connection and/or device status from the exchange (5) to the requesting subscriber line (1), the requesting subscriber line (1) confirms said transmission by means of a further message (RELEASE COMPLETE) from the requesting subscriber line (1) to the first exchange (2) and thereupon the connection from the requesting subscriber line (1) to the exchange (2) is released.

9. Method according to one of the preceding claims,
**characterised in that**
a user terminal that requests the operator station (1) to initiate a call processing attempt is informed directly with regard to the determined connection and device status of the user terminal (6).

## Revendications

1. Procédé de détermination de l'état de liaison et/ou d'appareil d'un terminal d'abonné,
- dans lequel un message d'interrogation (REGISTER) est transmis, conjointement avec un identificateur de raccordement du terminal d'abonné (6) dont l'état de liaison et/ou d'appareil doit être déterminé, par un raccordement demandeur (1) à un centre de commutation (5) du terminal d'abonné (6), et
- dans lequel l'état de liaison et/ou d'appareil est transmis par le centre de commutation (5) au raccordement demandeur (1),
**caractérisé par le fait que**
- l'état de liaison et/ou d'appareil du terminal d'abonné (6) est déterminé par le centre de commutation (5).

2. Procédé selon la revendication 1,
**caractérisé par le fait que** le raccordement demandeur est un poste d'opérateur (1) ou un autre terminal d'abonné.

3. Procédé selon la revendication 1 ou 2,
**caractérisé par le fait que** l'état de liaison et/ou d'appareil déterminé du terminal d'abonné (6) est indiqué par des moyens optiques au raccordement demandeur (1).

4. Procédé selon l'une des revendications précédentes,
**caractérisé par le fait que** la transmission du message d'interrogation ainsi que la transmission de l'état de liaison et/ou d'appareil déterminé s'effectuent à chaque fois par l'intermédiaire d'un canal de signalisation (canal D, TCAP).

5. Procédé selon l'une des revendications précédentes,
**caractérisé par le fait que** l'étape de la transmission du message d'interrogation conjointement avec l'identificateur de raccordement du terminal d'abonné (6) au centre de commutation (5) du terminal d'abonné (6) dont l'état de liaison et/ou d'appareil doit être déterminé comporte les étapes suivantes :
- transmission du message d'interrogation conjointement avec l'identificateur de raccordement du terminal d'abonné (6) par le raccordement demandeur (1) à un centre de commutation (3) du raccordement demandeur (1), et
- transmission du message d'interrogation et de l'identificateur de raccordement du terminal d'abonné (6) par le centre de commutation (3) du raccordement demandeur (1) au centre de commutation (5) du terminal d'abonné (6).

6. Procédé selon la revendication 5,
**caractérisé par le fait que** l'étape de la transmission du message d'interrogation et de l'identificateur de raccordement du terminal d'abonné (6) du centre de commutation (3) du raccordement demandeur (1) au centre de commutation (5) du terminal d'abonné (6) s'effectue sans connexion (TCAP) à l'aide de l'identificateur de raccordement du terminal d'abonné (6).

7. Procédé selon la revendication 5,
**caractérisé par le fait que** l'étape de la transmission du message d'interrogation et de l'identificateur de raccordement du terminal d'abonné (6) du centre de commutation (3) du raccordement demandeur (1) au centre de commutation (5) du terminal d'abonné (6) s'effectue par l'intermédiaire d'une liaison de sous-système utilisateur RNIS (ISUP).

8. Procédé selon l'une des revendications précédentes,
**caractérisé par le fait que**, après l'étape de la transmission de l'état de liaison et d'appareil déterminé du centre de commutation (5) au raccordement demandeur (1), le raccordement demandeur (1) confirme cette transmission par un autre message (RELEASE COMPLETE) envoyé par le raccordement demandeur (1) au premier centre de commutation (2) et que la liaison du raccordement demandeur (1) au centre de commutation (2) est alors libérée.

9. Procédé selon l'une des revendications précédentes,
**caractérisé par le fait qu'**un terminal d'abonné qui a demandé une tentative de commutation auprès du poste d'opérateur (1) est informé directement de l'état de liaison et d'appareil déterminé du terminal d'abonné (6).
